(19) Europäisches Patentamt / European Patent Office / Office européen des brevets

(11) **EP 1 867 850 A1**

(12) **EUROPEAN PATENT APPLICATION**

(43) Date of publication:
**19.12.2007 Bulletin 2007/51**

(51) Int Cl.:
*F02B 37/00* (2006.01)   *F02B 39/16* (2006.01)
*F01D 21/00* (2006.01)   *F02D 41/00* (2006.01)
*F02D 41/22* (2006.01)

(21) Application number: **07110223.0**

(22) Date of filing: **13.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **13.06.2006 US 452855**

(71) Applicant: **Honeywell International Inc.**
**Morristown NJ 07962 (US)**

(72) Inventor: **FIGURA, Giorgio**
**88000, Epinal (FR)**

(74) Representative: **Freeman, Jacqueline Carol**
**W.P.Thompson & Co.**
**55 Drury Lane**
**London WC2B 5SQ (GB)**

(54) **System and method for turbocharger early failure detection and avoidance**

(57)   Early detection and avoidance of turbocharger failure are provided by monitoring vibration of the turbocharger rotor using a vibration sensor and providing the output signal of the sensor to a controller programmed to periodically compare the magnitude of the vibration to a predetermined maximum limit. Upon the magnitude of the vibration exceeding the maximum limit, thus indicating a potential abnormal condition, the controller issues a command to a fuel controller for the engine to cause the fuel controller to place the engine in a predetermined safe operating mode selected to reduce the likelihood of turbocharger and engine damage from the abnormal condition.

FIG. 1

EP 1 867 850 A1

**Description**

BACKGROUND OF THE INVENTION

The present invention relates to internal combustion engines that are turbocharged, and more particularly relates to a method and a system for operating a turbocharged engine system.

An exhaust gas-driven turbocharger is a device used in conjunction with an internal combustion engine for increasing the power output of the engine by compressing the air that is delivered to the air intake of the engine to be mixed with fuel and burned in the engine. A turbocharger comprises a compressor wheel mounted on one end of a shaft in a compressor housing and a turbine wheel mounted on the other end of the shaft in a turbine housing. Typically the turbine housing is formed separately from the compressor housing, and there is yet another center housing connected between the turbine and compressor housings for containing bearings for the shaft. The turbine housing defines a generally annular chamber that surrounds the turbine wheel and that receives exhaust gas from an engine. The turbine assembly includes a nozzle that leads from the chamber into the turbine wheel. The exhaust gas flows from the chamber through the nozzle to the turbine wheel and the turbine wheel is driven by the exhaust gas. The turbine thus extracts power from the exhaust gas and drives the compressor. The compressor receives ambient air through an inlet of the compressor housing and the air is compressed by the compressor wheel and is then discharged from the housing to the engine air intake.

Turbochargers typically operate at high rotational speeds, which in some cases can exceed 100,000 rpm. The conditions experienced by the bearing system for the turbocharger rotor thus are challenging. The bearing system, which typically is lubricated by oil from the engine's oil system, is susceptible to damage and failure from various causes, but chief among them are contaminated oil and foreign object damage to the compressor or turbine. Contaminated oil can cause rapid wear of the bearing surfaces and eventually lead to bearing failure. Foreign object damage to the compressor or turbine can cause rotor imbalance that likewise can lead to bearing failure. Bearing failures can cause bearing oil sealing devise failure that can lead significant amount of oil into the engine combustion chamber. This event is likely to bring to the engine failure and to a not controlled engine operating condition, both of which are events which put the vehicle passengers in unsafe conditions

These two failure modes are currently difficult to predict or prevent. The present invention seeks to address this problem.

BRIEF SUMMARY OF THE INVENTION

In accordance with one aspect of the invention, a method is provided for operating a turbocharged engine system having an internal combustion engine coupled to a turbocharger, the turbocharger having a rotor comprising a turbine and a compressor connected by a rotatable shaft that extends through a bearing-containing center housing of the turbocharger, the turbine being arranged to receive exhaust gas from the engine in order to drive the compressor, the compressor being arranged to supply pressurized air to an intake of the engine. The method comprises the steps of:

detecting vibration of the rotor using a vibration sensor that produces an output signal indicative of the vibration of the rotor;
providing the output signal of the vibration sensor to a controller programmed to periodically compare a magnitude of the vibration to a predetermined maximum limit; and
upon the magnitude of the vibration exceeding the maximum limit, thus indicating a potential abnormal condition, the controller issuing a command to a fuel controller for the engine to cause the fuel controller to place the engine in a predetermined safe operating mode selected to reduce the likelihood of turbocharger and engine damage from the abnormal condition and indicating the need of turbocharger replacement ....

The controller can also cause an alarm to be generated when the potential abnormal condition is detected. It is also possible for the controller to utilize a plurality of progressively increasing vibration limits and to take different actions when different ones of the limits are exceeded. For example, a relatively low limit can be employed that, when exceeded, results in the controller causing an alarm to be generated to warn the operator of the engine system that a potential abnormal condition exists, while continuing to permit the engine to operate in a normal mode. Additionally, a higher limit can be employed that, when exceeded, results in not only an alarm (which can be of a different nature from the first alarm) being generated, but also results in the controller placing the engine into the safe operating mode. More than two different vibration limits can be utilized, if desired.

The method can further comprise the step of recording the output signal of the vibration sensor on a recording device as a function of time so as to produce a history of rotor vibration for predictive and/or diagnostic purposes. The controller can be programmed to analyze the history of rotor vibration and to identify trends in the history that may be indicative of a potential impending failure, or that may be indicative of a cause of an actual failure or abnormal condition.

In one embodiment of the invention, the safe operating mode of the engine is initiated by the controller causing the fuel controller to reduce a rate of fuel flow provided to the engine relative to a rate in effect when the potential abnormal condition is detected. The fuel flow rate can be reduced to a predetermined value that is irrespective of the rate in effect when the potential abnormal condition is detected. Alternatively, the fuel flow rate can be reduced by a predetermined percentage of the rate in effect when the potential abnormal condition is detected, or can be reduced to a rate that is some other function of the rate in effect when the potential abnormal condition is detected.

In accordance with another aspect of the invention, a system for operating a turbocharged engine system is provided. The system comprises:

a vibration sensor structured and arranged for detecting vibration of the rotor and producing an output signal indicative of the vibration of the rotor; and a controller programmed to periodically compare a magnitude of the vibration to a predetermined maximum limit for vibration magnitude and, upon the magnitude of the vibration exceeding the maximum limit, thus indicating a potential abnormal condition, to issue a command to a fuel controller for the engine to cause the fuel controller to place the engine in a predetermined safe operating mode selected to reduce the likelihood of turbocharger and engine damage from the abnormal condition.

The system can also include a recording device structured and arranged for recording the output signal of the vibration sensor as a function of time so as to produce a history of rotor vibration for diagnostic purposes. The recording device can be of various types, including but not limited to devices for recording data on magnetic recording media, devices for recording data on optical recording media, RAM devices, flash memory devices, and the like.

The controller can be the engine control unit (ECU) or can be integrated into the ECU. Alternatively, the controller can be a stand-alone unit separate from the ECU. The recording device, when present, can be integrated in the controller or can be a stand-alone unit connected with the controller.

BRIEF DESCRIPTION OF THE SEVERAL VIEWS OF THE DRAWING(S)

Having thus described the invention in general terms, reference will now be made to the accompanying drawings, which are not necessarily drawn to scale, and wherein:

F1G. 1 is a diagrammatic illustration of a turbocharged engine system in accordance with one embodiment of the invention; and

FIG. 2 is a flowchart illustrating a method in accordance with one embodiment of the invention.

DETAILED DESCRIPTION OF THE INVENTION

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

A turbocharged engine system **10** in accordance with one embodiment of the invention is schematically illustrated in FIG. I. The system includes an internal combustion engine **12** such as a reciprocating gasoline or diesel engine, and a turbocharger **20** coupled with the engine. The engine **12** includes an exhaust gas manifold **14** that receives exhaust gas from the cylinders of the engine. The turbocharger **20** comprises a turbine **22** that is coupled to the exhaust gas manifold **14** via an exhaust duct **16**. The turbine is driven by expansion of the exhaust gas passing through the turbine. The turbine is connected to one end of a shaft **24** that rotates in bearings contained in a center housing **26** of the turbocharger. The other end of the shaft is connected to a compressor **28**. Rotation of the turbine causes the compressor to be rotated so as to compress air that is drawn in through an inlet of the compressor.

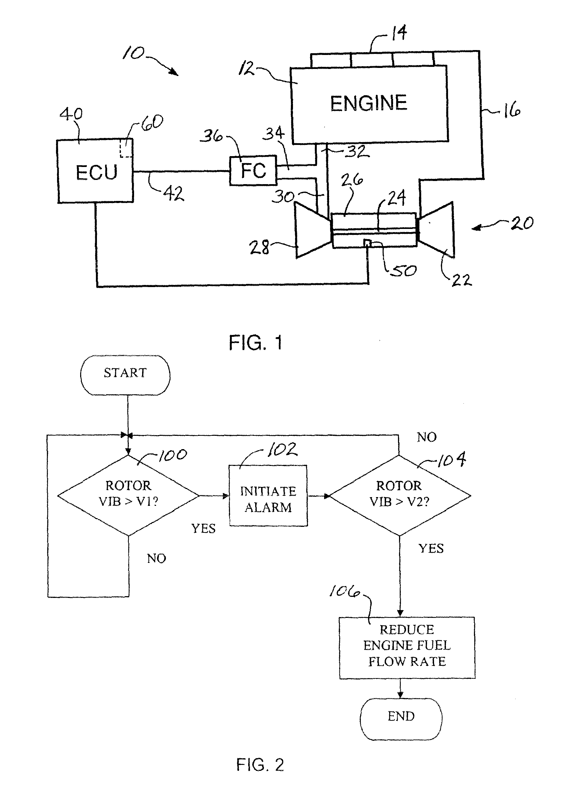

The compressor discharges the pressurized air through a discharge duct **30** that is connected to an air intake **32** of the engine. The pressurized air is mixed with fuel supplied through a fuel supply line **34** by a fuel controller **36**. FIG. 1 schematically illustrates the air and fuel being mixed upstream of the air intake **32**, but it will be understood that any of various known schemes for mixing the fuel and air to create an air-fuel mixture for supply to the engine cylinders can be used. The fuel controller **36** can be any suitable device operable to regulate the flow rate of fuel supplied to the engine, and generally will include a controllable valve mechanism by which the fuel flow rate can be set to any desired value between zero and a predetermined maximum flow rate.

The engine system includes an engine control unit (ECU) **40** that contains a microprocessor and memory. The ECU is operable to execute a set of programmed instructions stored in nonvolatile memory of the ECU, for controlling various components of the engine system to regulate the operation of the engine. The ECU receives data from various engine sensors (not shown) that sense temperatures, pressures, engine speed, and other parameters, and provides control signals to various engine components based in part on the received data. In particular, the ECU is connected by a communication line **42** to the engine fuel controller **36** for receiving data (e.g., fuel flow rate, fuel temperature, etc.), and for providing control signals to the fuel controller to regulate the fuel flow rate to the engine.

The engine system **10** further comprises at least one vibration sensor **50** arranged for detecting vibration of the turbocharger rotor. The vibration sensor can be of various types such as piezoelectric, capacitance, null-balance, strain gage, resonance beam, piezoresistive and magnetic induction. Vibration sensors can measure vibration along only one axis, or along two or three orthogonal axes simultaneously.

The force associated with the vibration (usually expressed in terms of the gravity or "G" force) is proportional to the amplitude A of the vibration and the square of the frequency F of the vibration, as follows:

$$G = kAF^2,$$

where *k* is a constant whose value is dependent on the particular characteristics of the system undergoing the vibration.

The "G" force represents the magnitude of the destructive force of the vibration. This force is not measured directly. Instead, the vibration sensor generally produces a signal indicative of the displacement of an element in the sensor. Based on the time-varying displacement, the velocity of the element's movement can be determined by taking the first time derivative of the displacement, and the acceleration of the element can be determined by taking the second time derivative of the displacement. Analysis of the time-varying output signal of the sensor can also yield the amplitude and frequency of displacement, which enables the calculation of the "G" force from the above equation.

The vibration sensor **50** is connected to the ECU **40** or to another controller that is integrated in the ECU or is a stand-alone unit separate from the ECU. In any event, the controller receives the output signal from the vibration sensor **50**. Analysis of the time-varying output signal of the sensor to deduce the amplitude and frequency of displacement, and optionally the "G" force, can be performed in the controller based on known vibration analysis techniques. Alternatively, some vibration sensors can include onboard capabilities to perform such analysis and provide an output signal directly indicative of a parameter of interest such as "G" force. In one embodiment of the invention, the analysis is performed in real time, whether by the sensor or by the controller. This allows a virtually instantaneous indication of the "health" of the turbocharger rotor.

As noted, the conditions experienced by the bearing system for the turbocharger rotor are challenging. The bearing system, which typically is lubricated by oil from the engine's oil system, is susceptible to damage and failure from various causes, but chief among them are contaminated oil and foreign object damage to the compressor or turbine. Contaminated oil can cause rapid wear of the bearing surfaces and eventually lead to bearing failure. Foreign object damage to the compressor or turbine can cause rotor imbalance that likewise can lead to bearing failure.

Bearing wear generally occurs over time as opposed to suddenly, and is characterized by an increase in rotor vibration over time. If the bearing deterioration is allowed to continue long enough, the magnitude of the vibration (which can be characterized by the displacement amplitude A or the "G" force) can reach a destructive level at which a catastrophic failure of the bearings can occur. It is desired to be able to detect the deterioration process early on to allow maintenance personnel to investigate whether maintenance or replacement of the bearings may be indicated, and thereby to prevent such catastrophic failures.

Foreign object damage (FOD) can occur over time or suddenly, and thus can be characterized by an increase in vibration magnitude over time or a sudden increase in vibration. In either case, it is desired to be able to detect the increase in vibration magnitude early enough to allow investigation and possible maintenance or replacement actions to be taken before any catastrophic failure occurs.

In accordance with the invention, the controller or ECU **40** is operable to determine whether the vibration magnitude exceeds one or more predetermined limits, and to take predetermined actions when one or more limits are exceeded in order to prevent or substantially reduce the likelihood of a catastrophic failure of the turbocharger **20**. With reference to FIG. 2, a method in accordance with one embodiment of the invention is illustrated in flow chart form. The controller is programmed to execute the steps of the method shown in FIG. 2 on a periodic basis. The controller at step **100** determines whether the rotor vibration magnitude *VIB* as indicated by the sensor **50** exceeds a predetermined first limit *V1*. The first limit can be a limit on vibration amplitude or a limit on "G" force deduced from the sensor output signal. Alternatively, the first limit could be a limit on some other vibration-related parameter of interest. If the vibration magnitude *VIB* exceeds the limit *V1,* thus indicating a potential abnormal condition in the turbocharger, then the controller at step **102** can cause an alarm to be generated. The alarm can constitute, for example, a warning light and/or an audible alarm provided so that an operator of the engine system can perceive the alarm.

At step **104**, the controller then determines whether the vibration magnitude *VIB* exceeds a predetermined second limit *V2*. In either step **100** or step **104**, if the respective vibration limit is not exceeded, then the controller returns to the beginning at step **100** and the control loop is executed again at the next pass-through.

If the second limit *V2* is exceeded at step **104**, thus indicating a potential abnormal condition in the turbocharger, the controller at step **106** issues a command to the fuel controller for the engine to cause the fuel controller to place the engine in a predetermined safe operating mode selected to reduce the likelihood of turbocharger and engine damage from the abnormal condition. In particular, the controller can provide a control signal to the fuel controller to reduce the engine fuel flow rate from the rate in effect at the current time. The fuel flow rate can be reduced to a predetermined value that is irrespective of the rate in effect when the potential abnormal condition is detected. Alternatively, the fuel flow rate can be reduced by a predetermined percentage of the rate in effect when the potential abnormal condition is detected, or can be reduced to a rate that is some other function of the rate in effect when the potential abnormal condition is detected.

The limits *V1, V2* are graduated, i.e., the magnitude of *V1* is less than that of *V2*. The limit *V1* can be selected to attempt to identify potential abnormal conditions that are not so severe as to warrant taking immediate action to protect the turbocharger. The limit *V2* can be selected to identify abnormal conditions that are considered potentially catastrophic if the engine and turbocharger were allowed to continue to operate normally. It is also possible to employ only a single limit or to employ more than two graduated limits.

With reference again to FIG. I, the vibration sensor **50** can be disposed in various locations relative to the turbocharger rotor. For example, the sensor can be affixed to an exterior surface of the center housing **26**, or to an interior surface of the center housing. Vibration of the center housing is an indication of vibration of the turbocharger rotor. When the turbocharger is installed in a vehicle, vehicle movement can also induce center housing vibration. However, such extraneous vibrations can be distinguished from rotor-induced vibrations by suitable data analysis using filtering and other techniques.

The engine system **10** can also include a data recording device **60** structured and arranged for recording the output signal of the vibration sensor **50** (and/or data derived from analysis of the output signal) as a function of time so as to produce a history of rotor vibration for predictive and/or diagnostic purposes. The recording device can be of various types, including but not limited to devices for recording data on magnetic recording media, devices for recording data on optical recording media, RAM devices, flash memory devices, and the like. As illustrated, the recording device can be integrated into the ECU **40**. Alternatively, the recording device could be a stand-alone unit.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A method for operating a turbocharged engine system having an internal combustion engine coupled to a turbocharger, the turbocharger having a rotor comprising a turbine and a compressor connected by a rotatable shaft that extends through a bearing-containing center housing of the turbocharger, the turbine being arranged to receive exhaust gas from the engine in order to drive the compressor, the compressor being arranged to supply pressurized air to an intake of the engine, the method comprising the steps of:

   detecting vibration of the rotor using a vibration sensor that produces an output signal indicative of the vibration of the rotor;
   providing the output signal of the vibration sensor to a controller programmed to periodically compare a magnitude of the vibration to a predetermined maximum limit for vibration magnitude; and
   upon the magnitude of the vibration exceeding the maximum limit, thus indicating a potential abnormal condition, the controller issuing a command to a fuel controller for the engine to cause the fuel controller to place the engine in a predetermined safe operating mode selected to reduce the likelihood of turbocharger and engine damage from the abnormal condition.

2. The method of claim 1, wherein upon the magnitude of the vibration exceeding the maximum limit, the controller causes an alarm to be given to an operator of the turbocharged engine system.

3. The method of claim 1, further comprising the step of recording the output signal of the vibration sensor on a recording device as a function of time so as to produce a history of rotor vibration for diagnostic purposes.

4. The method of claim 1, wherein the safe operating mode of the engine is initiated by the controller causing the fuel controller to reduce a rate of fuel flow provided to the engine relative to a rate in effect when the potential abnormal condition is detected.

5. A system for operating a turbocharged engine system having an internal combustion engine coupled to a turbocharger, the turbocharger having a rotor comprising a turbine and a compressor connected by a rotatable shaft that extends through a bearing-containing center housing of the turbocharger, the turbine being arranged to receive exhaust gas from the engine in order to drive the compressor, the compressor being arranged to supply pressurized air to an intake of the engine, the system comprising:

   a vibration sensor structured and arranged for detecting vibration of the rotor and producing an output signal indicative of the vibration of the rotor; and

a controller programmed to periodically compare a magnitude of the vibration to a predetermined maximum limit for vibration magnitude and, upon the magnitude of the vibration exceeding the maximum limit, thus indicating a potential abnormal condition, to issue a command to a fuel controller for the engine to cause the fuel controller to place the engine in a predetermined safe operating mode selected to reduce the likelihood of turbocharger and engine damage from the abnormal condition.

6. The system of claim 5, the controller being programmed to cause an alarm to be given to an operator of the turbocharged engine system upon the magnitude of the vibration exceeding the maximum limit.

7. The system of claim 5, further comprising a recording device structured and arranged for recording the output signal of the vibration sensor as a function of time so as to produce a history of rotor vibration for diagnostic purposes.

8. The system of claim 5, wherein the controller comprises an engine control unit for the engine.

9. The system of claim 5, wherein the controller is programmed to initiate the safe operating mode of the engine by causing the fuel controller to reduce a rate of fuel flow provided to the engine relative to a rate in effect when the potential abnormal condition is detected.

*10*

*40* *60*
*36* *34*
*12* *14*
**ENGINE**
*16*
**ECU**
*42*
**FC**
*32*
*30* *26* *24*
*28* *20*
*50* *22*

**FIG. 1**

```
        START

    ┌──────────┐
    │          │
    ▼          │
   /100\       │          102              NO
  /ROTOR\      │    ┌──────────┐         /104\
 / VIB > V1? \──────│ INITIATE │────────/ ROTOR \
 \          /  YES  │  ALARM   │        \ VIB > V2? /
  \        /        └──────────┘         \        /
   \  NO  /                               \      /
    │                                       │ YES
    │                                       ▼
    │                                  /106
    │                            ┌──────────────┐
    │                            │   REDUCE     │
    │                            │ ENGINE FUEL  │
    │                            │  FLOW RATE   │
    │                            └──────────────┘
    │                                    │
    │                                    ▼
    │                                  END
```

**FIG. 2**

**European Patent Office**

## EUROPEAN SEARCH REPORT

Application Number

EP 07 11 0223

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 953 110 A (CHARTRAND PAUL W [US]) 28 August 1990 (1990-08-28) * column 2, lines 24-33; figure 7 * * abstract; claim 9 * ----- | 1-9 | INV. F02B37/00 F02B39/16 F01D21/00 F02D41/00 F02D41/22 |
| A | US 2004/011340 A1 (HOSNY DIAA [US] ET AL) 22 January 2004 (2004-01-22) * the whole document * ----- | 1-9 | |
| A | EP 1 302 636 A1 (NSK LTD [JP]) 16 April 2003 (2003-04-16) * the whole document * ----- | 1-9 | |
| A | US 4 453 407 A (SATO KAZUO [JP] ET AL) 12 June 1984 (1984-06-12) * the whole document * ----- | 1-9 | |

TECHNICAL FIELDS SEARCHED (IPC)

F02B
F01D
F02D
F02C

The present search report has been drawn up for all claims

| Place of search | Date of completion of the search | Examiner |
|---|---|---|
| The Hague | 18 September 2007 | Blanc, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 11 0223

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2007

| Patent document cited in search report | | Publication date | Patent family member(s) | | Publication date |
|---|---|---|---|---|---|
| US 4953110 | A | 28-08-1990 | AU<br>AU | 626681 B2<br>5617490 A | 06-08-1992<br>05-12-1991 |
| US 2004011340 | A1 | 22-01-2004 | NONE | | |
| EP 1302636 | A1 | 16-04-2003 | WO<br>JP | 0206649 A1<br>2002039191 A | 24-01-2002<br>06-02-2002 |
| US 4453407 | A | 12-06-1984 | NONE | | |

EPO FORM P0459

For more details about this annex : see Official Journal of the European Patent Office, No. 12/82